# EUROPEAN PATENT APPLICATION

(11) **EP 4 657 716 A1**
(43) Date of publication of application: **03.12.2025**
(21) Application number: 25176448.6
(22) Date of filing: 14.05.2025
(51) Int. Cl.: H02K 1/18, H02K 3/52, H02K 5/04

(54) **MOTOR DEVICE**

(30) Priority: 31.05.2024 JP 2024089460
(71) Applicant: Mitsuba Corporation, Kiryu-shi, Gunma 376-8555 (JP)
(72) Inventor: SUZUKI, Mamoru, Kiryu-shi, Gunma, 376-8555 (JP)
(74) Representative: Becker Kurig & Partner Patentanwälte mbB

(57) **Abstract**

A cross-sectional shape of a motor case (21) along a radial direction of a rotor (40) is a square including corners (24a to 24d). The stator (30) includes: a core body (32); a core protrusion (33a to 33d), abutting against each of the corners (24a to 24d); teeth (34); and a coil (36), wound on each tooth (34) for each phase. The rotor (40) includes: a rotating shaft (41); and a ring magnet (43), provided on an outer peripheral part of the rotating shaft (41). In the radial direction of the rotor (40), between the rotor (40) and the corners (24a to 24c) and on line segments (L1 to L3) connecting a rotation center (C) of the rotor (40) and the corners (24a to 24c), connection terminals (Tu, Tv, Tw) of three phases are arranged that are respectively electrically connected to the coils (36) provided for each phase.

## Description

### [Technical Field]

The present invention relates to a motor device including a stator and a rotor.

### [Related Art]

For example, Patent Document 1 describes a brushless motor including a stator fixed to a housing and a rotor rotated relative to the stator. The brushless motor described in Patent Document 1 includes a molded busbar formed by molding three busbars with resin, as well as includes a terminal holder and a cover including a connector part.

### [Prior-Art Documents]

### [Patent Documents]

[Patent Document 1] Japanese Patent Laid-Open No. 2023-125684

### [SUMMARY OF THE INVENTION]

### [Problems to Be Solved by the Invention]

However, in the brushless motor described in Patent Document 1, since the molded busbar that is relatively thick overlaps the stator in the axial direction, it is difficult to reduce the axial length of the brushless motor and further reduce the size of the brushless motor. Since the connector part provided in the terminal holder and the cover partially protrudes in the radial direction of the housing, the brushless motor has low layout flexibility with respect to a fixing object.

An object of the present invention is to provide a motor device whose size can be further reduced and whose layout flexibility with respect to a fixing object can be improved.

### [Means for Solving the Problems]

In one aspect of a motor device, the motor device includes: a stator, fixed to the inside of a motor case; and a rotor, rotated relative to the stator. A cross-sectional shape of the motor case along a radial direction of the rotor is formed in a polygon including multiple corners. The stator includes: a core body of a cylindrical shape; a core protrusion, provided on an outer peripheral part of the core body and abutting against the corner; multiple teeth, provided on an inner peripheral part of the core body; and a coil, wound on each of the plurality of teeth for each phase. The rotor includes: a rotating shaft, driving a driving object; and a magnet, provided on an outer peripheral part of the rotating shaft. In the radial direction of the rotor, between the rotor and the corner and on a first line segment connecting a rotation center of the rotor and the corner, a connection terminal is arranged that is electrically connected to each of the coils provided for each phase.

### [Effects of the Invention]

According to the present invention, it is possible to realize a motor device whose size can be further reduced and whose layout flexibility with respect to a fixing object can be improved.

### [BRIEF DESCRIPTION OF THE DRAWINGS]

FIG. 1 is a perspective view showing a seat motor mounted in a vehicle.
FIG. 2 is a cross-sectional view along an axial direction of a rotating shaft of the seat motor of FIG. 1.
FIG. 3 is a cross-sectional view along line A-A of FIG. 2.
FIG. 4 is a view from arrow B of FIG. 2, showing a state in which a cover member is removed. FIG. 5 is a perspective view of a cover body as seen from a wiring unit side.
FIG. 6 is a perspective view of the cover body as seen from a sensor board side.
FIG. 7 is an exploded perspective view showing a rotor, a first planetary gear reducer and a second planetary gear reducer.
FIG. 8 is a perspective view showing the wiring unit.
FIG. 9 is a diagram describing an arrangement structure of U-phase, V-phase, W-phase connection terminals and a connector connection part for sensors.
FIG. 10 is an exploded perspective view of an electric motor part.
FIG. 11 is a diagram describing an energization test of the electric motor part.
FIG. 12 is a perspective view showing the electric motor part, the wiring unit, and a lid member. FIG. 13 is a diagram showing a procedure for connecting the wiring unit to the electric motor part. FIG. 14 is a diagram showing a procedure for connecting a speed reduction mechanism to the electric motor part.

### [DESCRIPTION OF THE EMBODIMENTS]

The following describes in detail an embodiment of the present invention using the drawings.

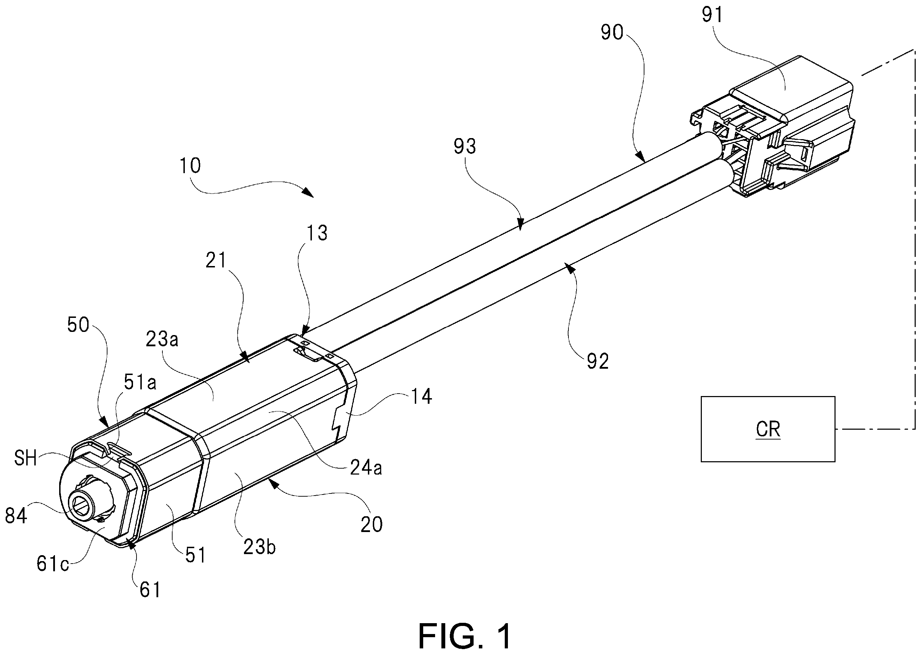

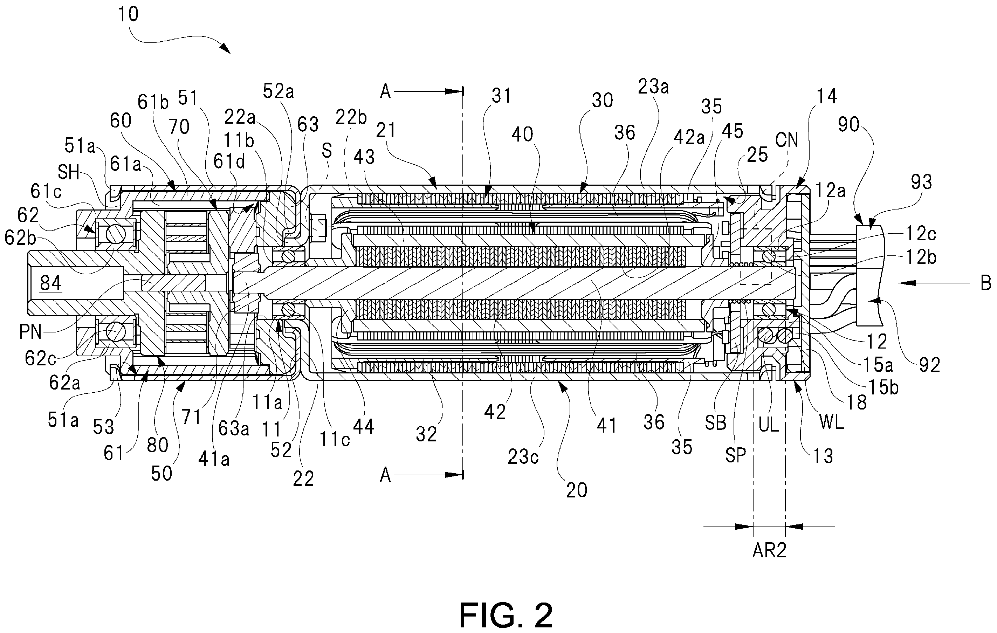

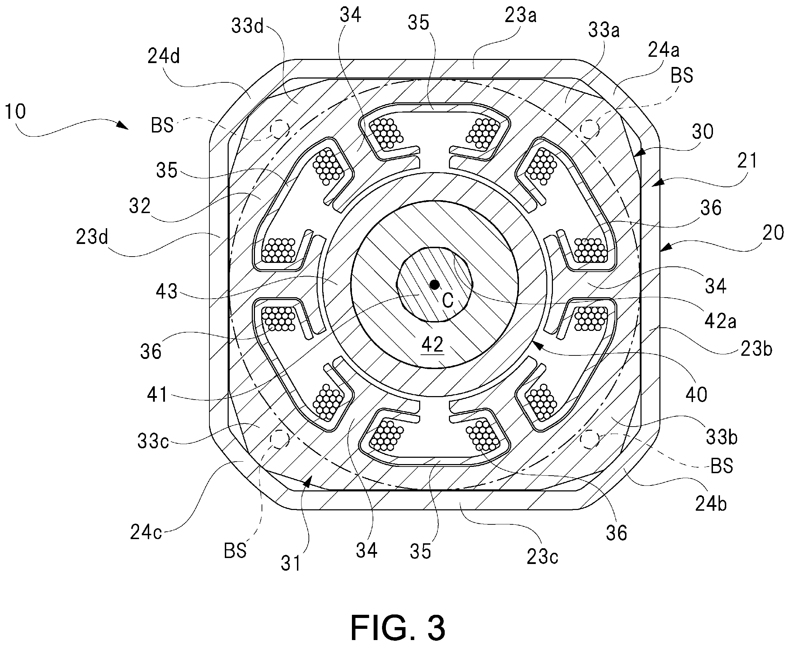

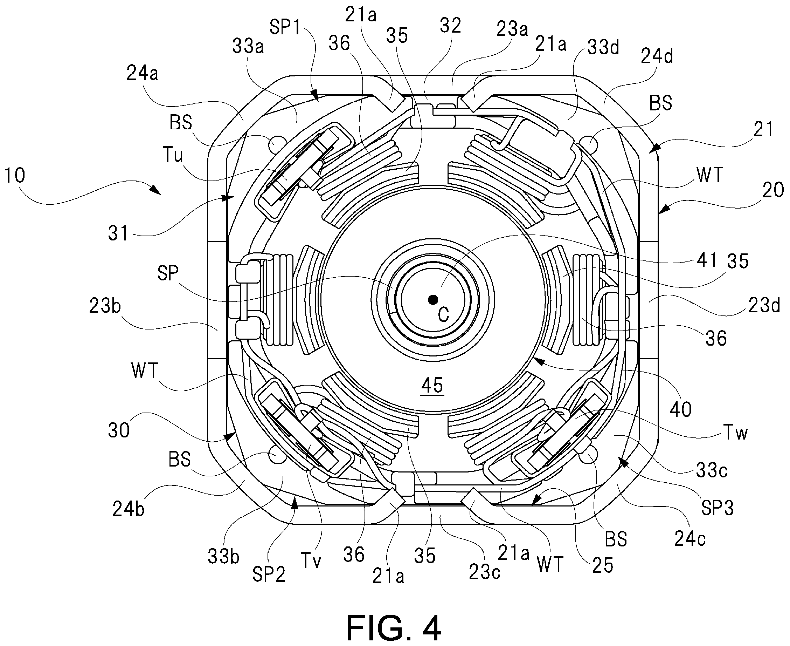

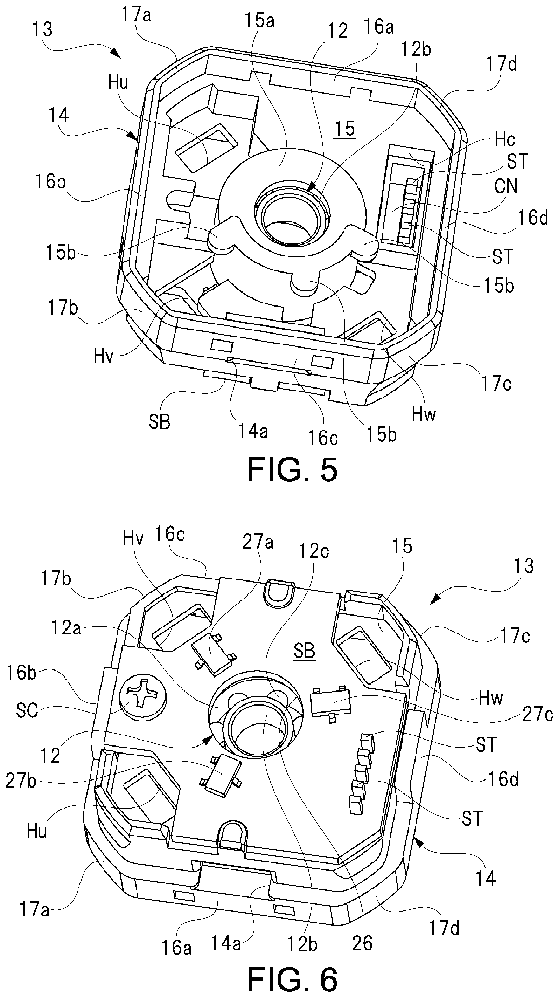

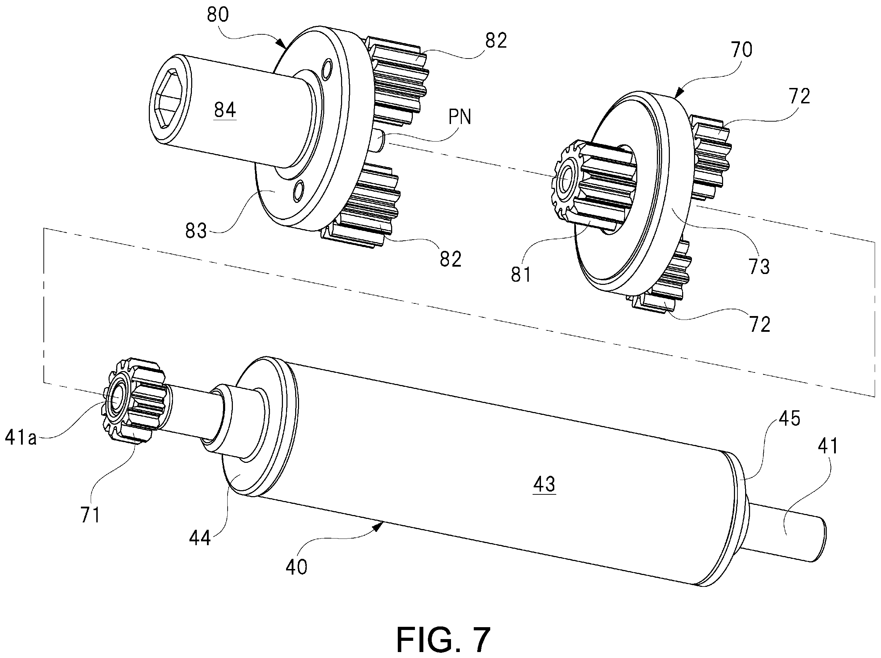

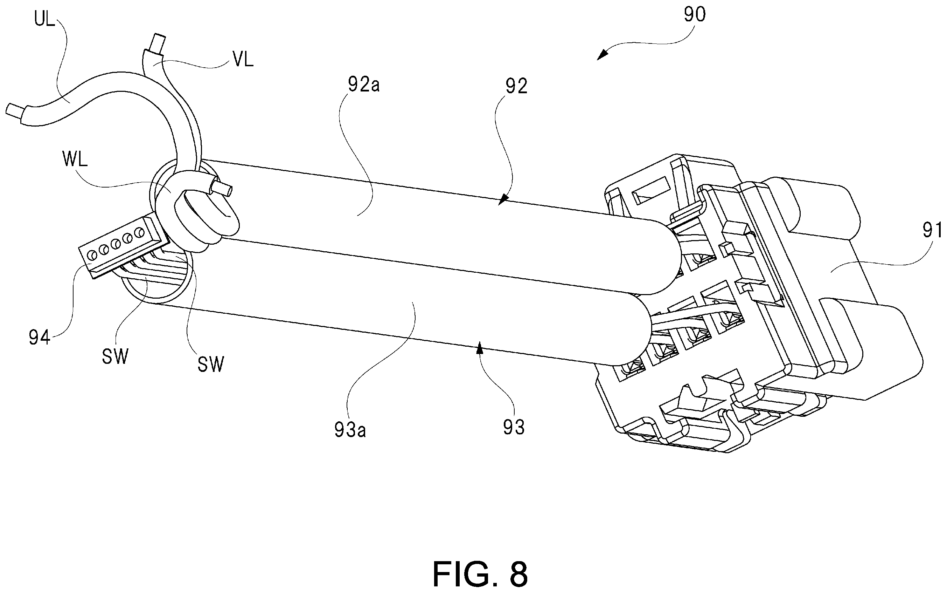

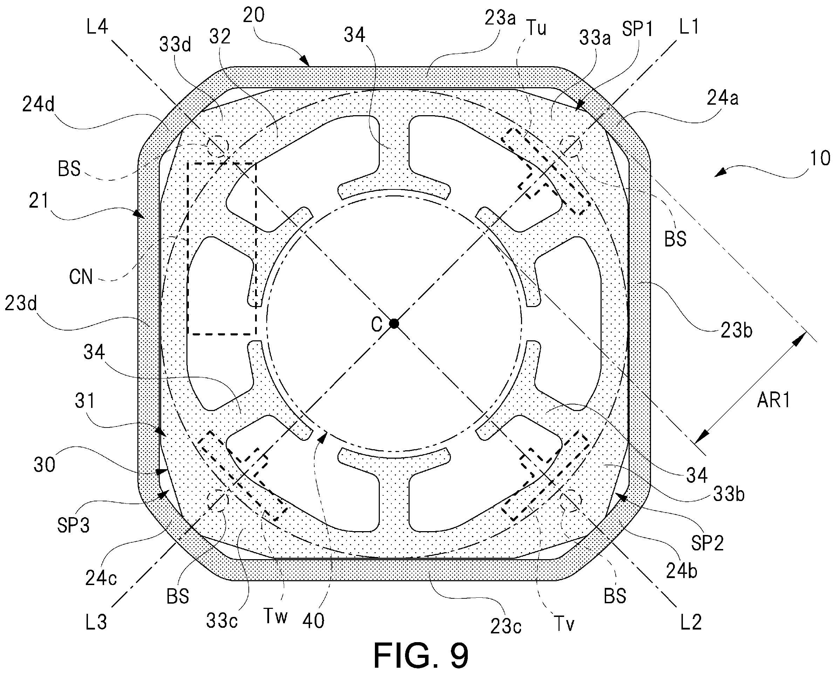

FIG. 1 illustrates a perspective view showing a seat motor mounted in a vehicle; FIG. 2 illustrates a cross-sectional view along an axial direction of a rotating shaft of the seat motor of FIG. 1; FIG. 3 illustrates a cross-sectional view along line A-A of FIG. 2; FIG. 4 illustrates a view from arrow B of FIG. 2, showing a state in which a cover member is removed; FIG. 5 illustrates a perspective view of a cover body as seen from a wiring unit side; FIG. 6 illustrates a perspective view of the cover body as seen from a sensor board side; FIG. 7 illustrates an exploded perspective view showing a rotor, a first planetary gear reducer and a second planetary gear reducer; FIG. 8 illustrates a perspective view showing the wiring unit; and FIG. 9 illustrates a diagram describing an arrangement structure of U-phase, V-phase, W-phase connection terminals and a connector connection part for sensors.

### <Overview of Power Seat>

A seat motor 10 shown in FIG. 1 is a driving source built in a power seat mounted in a vehicle such as an automobile. Specifically, the seat motor 10 drives a reclining mechanism of a backrest, a slide mechanism that moves the power seat back and forth, and a lifting mechanism that raises and lowers a seat portion, or the like. Accordingly, by a driver operating an operation switch arranged beside the power seat or the like, the posture or position of the power seat can be matched with the driver's preferred driving position.

The seat motor 10 includes a wiring unit 90 including a connector connection part 91. The connector connection part 91 is electrically connected to an in-vehicle controller CR. Power wiring 92 and signal wiring 93 are arranged between the connector connection part 91 and an electric motor part 20 that forms the seat motor 10. Here, the power wiring 92 supplies driving current to the electric motor part 20, and the signal wiring 93 sends a sensor signal indicating a rotation state of the electric motor part 20 to the in-vehicle controller CR.

Accordingly, the in-vehicle controller CR is able to store, for example, multiple driving positions (postures of the power seat) to accommodate drivers of different physiques. The driver may call a stored driving position according to their preference.

The seat motor 10 corresponds to the motor device in the present invention.

### <Seat Motor>

As shown in FIG. 1 to FIG. 9, the seat motor 10 includes the electric motor part 20, a speed reduction mechanism 50, and a wiring unit 90. Specifically, the electric motor part 20 and the speed reduction mechanism 50 are respectively arranged on the same axis. The electric motor part 20 and the speed reduction mechanism 50 are formed in a short, angular, substantially rod-like shape in a state (state shown in FIG. 1 and FIG. 2) of being connected to each other.

### <Electric Motor Part>

The electric motor part 20 includes a motor case 21 that forms an outline of the electric motor part 20. The motor case 21 is formed into a bottomed cylindrical shape by subjecting a steel plate to deep drawing or the like. As shown in FIG. 3, a cross-sectional shape of the motor case 21 along a direction orthogonal to a longitudinal direction is formed in a substantially square shape.

Specifically, in the longitudinal direction of the motor case 21, a bottom wall part 22 is provided on a side (left side in FIG. 2) where the speed reduction mechanism 50 is provided. As shown in FIG. 3, FIG. 4, and FIG. 9, the motor case 21 includes a first sidewall part 23a, a second sidewall part 23b, a third sidewall part 23c, and a fourth sidewall part 23d.

The first sidewall part 23a and the second sidewall part 23b are connected to each other via a first corner 24a, and the second sidewall part 23b and the third sidewall part 23c are connected to each other via a second corner 24b. Furthermore, the third sidewall part 23c and the fourth sidewall part 23d are connected to each other via a third corner 24c, and the fourth sidewall part 23d and the first sidewall part 23a are connected to each other via a fourth corner 24d.

In this way, the motor case 21 has a cross-sectional shape along a radial direction of a rotor 40 that is formed in a regular polygon (a square in the present embodiment) including a total of four corners, namely a first corner 24a to a fourth corner 24d. The first corner 24a to the fourth corner 24d correspond to the corner in the present invention.

Here, all of the first corner 24a to the fourth corner 24d are of an arc shape that forms a portion of circles of the same size centered on a rotation center C of the rotor 40. That is, when the motor case 21 is viewed in an axial direction of the rotor 40, all of the first corner 24a to the fourth corner 24d are formed in an arc shape. Tip portions of a first core protrusion 33a, a second core protrusion 33b, a third core protrusion 33c, and a fourth core protrusion 33d that form an outer peripheral part of a stator core 31 abut against inner peripheral parts of an arc shape inside the first corner 24a to the fourth corner 24d, respectively.

Here, portions where the stator core 31 and the motor case 21 contact, that is, places where the stator core 31 and the motor case 21 abut against each other, only include four places in total, namely the tip portions of the first core protrusion 33a to the fourth core protrusion 33d. In the other portions between the stator core 31 and the motor case 21, minute gaps (not shown in detail) are formed. Accordingly, the press-fit load of the stator core 31 against the motor case 21 is prevented from becoming excessively large, and the ease of assembly of the electric motor part 20 is improved. A fixing strength of the stator core 31 with respect to the motor case 21 is sufficiently secured by the press-fit load of the stator core 31 and the motor case 21 of a certain magnitude.

As shown in FIG. 2, a bearing support tube 22a is integrally provided at a central part of the bottom wall part 22 that forms the motor case 21. An outer ring 11a of a first ball bearing 11 is fixed by press-fitting to the bearing support tube 22a of the bottom wall part 22.

Specifically, substantially 2/3 of the first ball bearing 11 on a side (right side in FIG. 2) where the electric motor part 20 is provided in the axial direction is press-fitted into the bearing support tube 22a. Substantially 1/3 of the first ball bearing 11 on a side where the speed reduction mechanism 50 is provided in the axial direction is exposed (protruding) from the bearing support tube 22a toward the side where the speed reduction mechanism 50 is provided.

Here, the first ball bearing 11 rotatably supports a side of a rotating shaft 41 where the speed reduction mechanism 50 is provided in the axial direction, and an inner ring 11b of the first ball bearing 11 is mounted on the side of the rotating shaft 41 where the speed reduction mechanism 50 is provided. Specifically, the inner ring 11b of the first ball bearing 11 is mounted on the rotating shaft 41 in a manner that allows movement only in the axial direction of the rotating shaft 41.

As shown in FIG. 2, in the radial direction of the first ball bearing 11, multiple steel balls 11c are arranged between the outer ring 11a arranged on the radial outside and the inner ring 11b arranged on the radial inside. Accordingly, the outer ring 11a and the inner ring 11b are capable of smooth relative rotation via the steel balls 11c.

Here, in the axial direction of the rotating shaft 41 (rotor 40), a side (right side in FIG. 2) where the wiring unit 90 of the seat motor 10 is arranged is defined as "one axial (longitudinal) side," and a side (left side in FIG. 2) where the speed reduction mechanism 50 of the seat motor 10 is arranged is defined as "other axial (longitudinal) side."

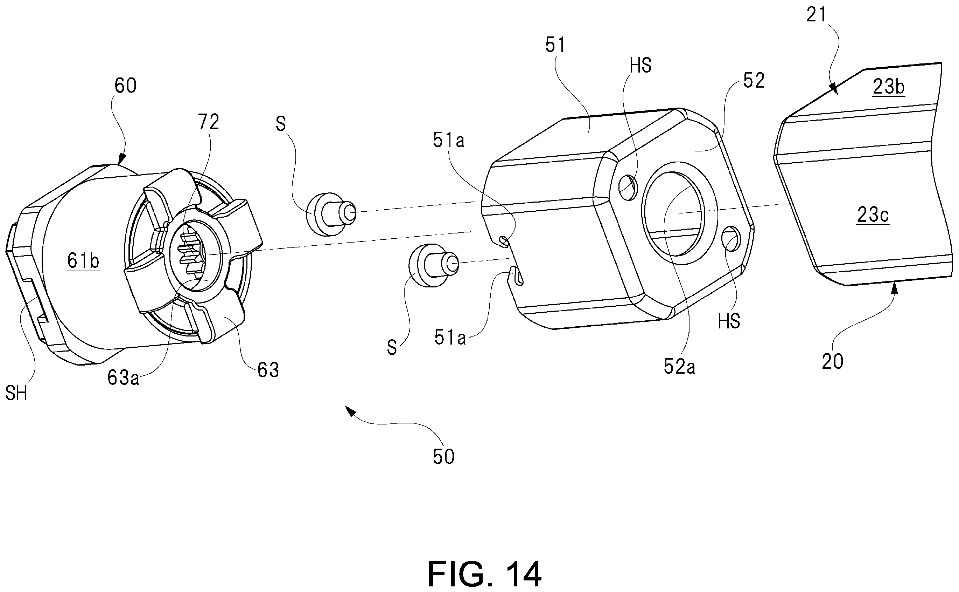

As shown in FIG. 2, a pair of screw holes 22b (only one is shown in the figure) are provided in the bottom wall part 22. Specifically, the pair of screw holes 22b are arranged facing each other with the bearing support tube 22a as the center. Each screw hole 22b has a fixing screw S (see FIG. 14) screwed therein to fix the speed reduction mechanism 50 to the electric motor part 20.

As shown in FIG. 2, an opening part 25 is provided on one axial side of the motor case 21, that is, the side opposite to the bottom wall part 22 side. Via the opening part 25, a stator 30 and the rotor 40 are incorporated into the inside of the motor case 21.

### <Stator>

As shown in FIG. 2 to FIG. 4 and FIG. 9, the stator 30 is fixed to the inside of the motor case 21. Specifically, the stator 30 includes the stator core 31 that is formed into a substantially cylindrical shape by laminating thin steel plates made of ferromagnetic material. The stator core 31 is fixed by being press-fitted into the inside of the motor case 21.

As shown in FIG. 3 and FIG. 9, the stator core 31 includes a core body 32 formed in a cylindrical shape. On an outer peripheral part of the core body 32, the first core protrusion 33a, the second core protrusion 33b, the third core protrusion 33c, and the fourth core protrusion 33d (four in total) formed in a substantially triangular shape when the core body 32 is viewed in the axial direction are integrally provided.

The first core protrusion 33a to the fourth core protrusion 33d correspond to the core protrusion in the present invention.

The tip portions of the first core protrusion 33a to the fourth core protrusion 33d respectively abut against the inner peripheral parts of the first corner 24a to the fourth corner 24d. Specifically, the tip portions of the first core protrusion 33a to the fourth core protrusion 33d are in surface contact with the inner peripheral parts of an arc shape inside the first corner 24a to the fourth corner 24d.

Accordingly, damage such as scraping of the inner peripheral parts of the first corner 24a to the fourth corner 24d when the stator core 31 is press-fitted and fixed into the motor case 21 is suppressed. On the other hand, a fixing strength of sufficient magnitude of the stator core 31 with respect to the motor case 21 can be secured with a sufficient magnitude. In FIG. 3 and FIG. 9, a dash-dotted line (reference line) is drawn at a boundary portion between the core body 32 and the first core protrusion 33a to the fourth core protrusion 33d.

Here, the stator 30 including the stator core 31 is incorporated from the opening part 25 of the motor case 21. During this incorporation work, an automatic assembly device (not shown) is used. Accordingly, the stator 30 is positioned at a specified position with high accuracy with respect to the axial direction of the motor case 21.

A boss BS for lamination fixing is provided in each of the first core protrusion 33a to the fourth core protrusion 33d. That is, the thin steel plates laminated to form the stator core 31 are firmly fixed to each other by a total of four bosses BS. In this way, when the stator core 31 is viewed in the axial direction, the bosses BS for lamination fixing are arranged in the first core protrusion 33a to the fourth core protrusion 33d that have relatively large area and are close to an outer peripheral part of the stator core 31. As shown in FIG. 9, a total of four bosses BS are arranged on a first line segment L1 to a fourth line segment L4. Accordingly, during the molding of the bosses BS, that is, during the assembly of the stator core 31, distortion of the core body 32 or teeth 34 is suppressed.

As shown in FIG. 3, on the radial inside, that is, an inner peripheral part of the core body 32, multiple teeth 34 protruding toward the rotor 40 are integrally provided. Here, the number of teeth 34 is equal to the number of slots in the stator core 31, and is six in the present embodiment. Of course, the number of teeth 34 can be arbitrarily set in accordance with the specifications of the electric motor part 20.

An insulator 35 made of a resin material such as plastic is mounted on each of the six teeth 34. A coil 36 is wound on each of the teeth 34 via the insulator 35. Here, coils 36 of the same phase are respectively wound on a pair of teeth 34 that are arranged facing each other with the rotor 40 as the center. That is, with respect to a circumferential direction of the stator 30, the coils 36 are arranged at equal intervals (intervals of 60 degrees) in the order of U-phase, V-phase, W-phase, U-phase, V-phase, and W-phase. In this way, each coil 36 is wound on each tooth 34 for each phase.

As shown in FIG. 4, two coils 36 each corresponding to U-phase, V-phase, and W-phase are electrically connected via a crossover wire WT to a U-phase connection terminal Tu, a V-phase connection terminal Tv, and a W-phase connection terminal Tw provided corresponding to U-phase, V-phase, and W-phase, respectively. The U-phase connection terminal Tu, V-phase connection terminal Tv, and W-phase connection terminal Tw are formed in a substantially plate shape using brass or the like having excellent conductivity, and are arranged on one axial side of the stator 30. That is, the U-phase connection terminal Tu, V-phase connection terminal Tv, and W-phase connection terminal Tw are arranged in the vicinity of the opening part 25 in the longitudinal direction of the motor case 21.

The U-phase connection terminal Tu, V-phase connection terminal Tv, and W-phase connection terminal Tw correspond to the connection terminal in the present invention.

Specifically, as shown in FIG. 9, the U-phase connection terminal Tu is arranged to overlap the core body 32 on one axial side of the core body 32 in the axial direction of the rotor 40. The U-phase connection terminal Tu is arranged (radial area AR1) between the rotor 40 and the first corner 24a in the radial direction of the rotor 40. Furthermore, the U-phase connection terminal Tu is arranged on the first line segment L1 that connects the rotation center C of the rotor 40 and a circumferential central part of the first corner 24a in the motor case 21 in the radial direction of the rotor 40.

The V-phase connection terminal Tv is also arranged to overlap the core body 32 on one axial side of the core body 32 in the axial direction of the rotor 40. The V-phase connection terminal Tv is arranged (area having the same width dimension as the radial area AR1) between the rotor 40 and the second corner 24b in the radial direction of the rotor 40. Furthermore, the V-phase connection terminal Tv is arranged on the second line segment L2 that connects the rotation center C of the rotor 40 and a circumferential central part of the second corner 24b in the motor case 21 in the radial direction of the rotor 40.

The W-phase connection terminal Tw is also arranged to overlap the core body 32 on one axial side of the core body 32 in the axial direction of the rotor 40. The W-phase connection terminal Tw is arranged (area having the same width dimension as the radial area AR1) between the rotor 40 and the third corner 24c in the radial direction of the rotor 40. Furthermore, the W-phase connection terminal Tw is arranged on the third line segment L3 that connects the rotation center C of the rotor 40 and a circumferential central part of the third corner 24c in the motor case 21 in the radial direction of the rotor 40.

The first line segment L1, the second line segment L2, and the third line segment L3 on which the U-phase connection terminal Tu, V-phase connection terminal Tv, and W-phase connection terminal Tw are respectively arranged correspond to a first line segment in the present invention. In FIG. 9, only the motor case 21 (dark hatching) and the stator core 31 (light hatching) are shown.

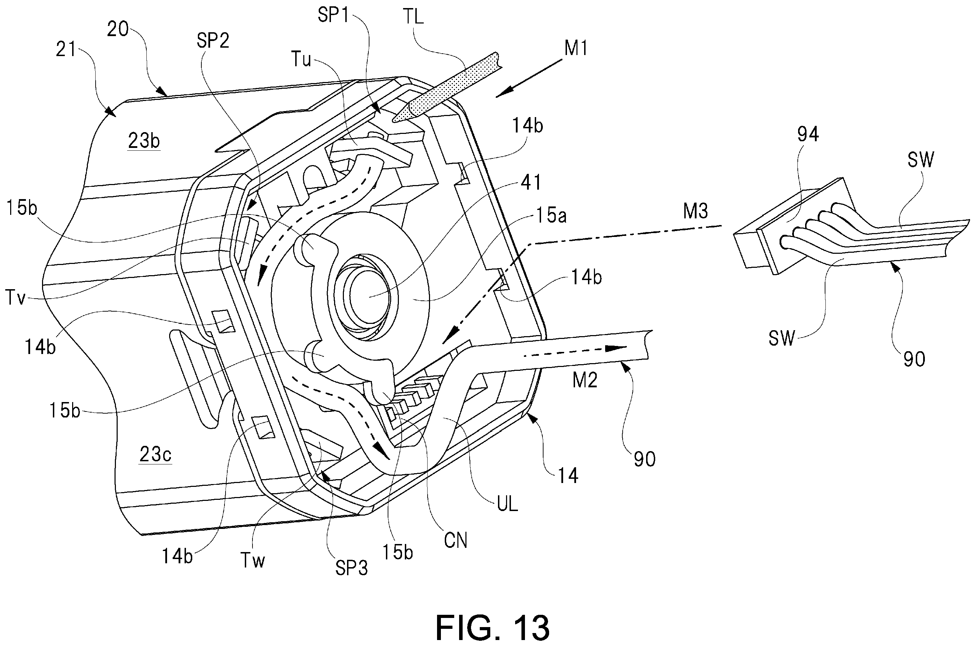

The U-phase connection terminal Tu, V-phase connection terminal Tv, and W-phase connection terminal Tw extend from one axial side of the stator 30 toward the wiring unit 90. A U-phase power line UL, a V-phase power line VL, and a W-phase power line WL (see FIG. 8) forming the power wiring 92 are respectively electrically connected to the wiring unit 90 side of the U-phase connection terminal Tu, V-phase connection terminal Tv, and W-phase connection terminal Tw. Specifically, the U-phase connection terminal Tu, V-phase connection terminal Tv, and W-phase connection terminal Tw are electrically connected to the U-phase power line UL, V-phase power line VL, and W-phase power line WL by soldering (see FIG. 13).

Here, as shown in FIG. 4 and FIG. 9, in the radial direction of the rotor 40, assembly jig introduction spaces SP1, SP2, and SP3 are respectively formed between the U-phase connection terminal Tu and the first corner 24a, between the V-phase connection terminal Tv and the second corner 24b, and between the W-phase connection terminal Tw and the third corner 24c. Specifically, the assembly jig introduction spaces SP1, SP2, and SP3 face the first core protrusion 33a, the second core protrusion 33b, and the third core protrusion 33c in the axial direction of the stator 30.

As shown in FIG. 13, the assembly jig introduction spaces SP1, SP2, and SP3 may allow a soldering iron TL as an assembly jig to enter during the assembly of the seat motor 10. In this way, the assembly jig introduction spaces SP1, SP2, and SP3 have a function of enabling easy soldering (connection) of the U-phase connection terminal Tu, V-phase connection terminal Tv, and W-phase connection terminal Tw as well as the U-phase power line UL, V-phase power line VL, and W-phase power line WL, respectively.

As shown in FIG. 9, in the radial direction of the rotor 40, (in an area having the same width dimension as the radial area AR1) between the rotor 40 and the fourth corner 24d and on the fourth line segment L4 connecting the rotation center C of the rotor 40 and the fourth corner 24d of the motor case 21, a portion of a sensor connector connection part CN (see FIG. 5) mounted on a sensor board SB (see FIG. 6) is arranged. Furthermore, the sensor connector connection part CN faces the fourth core protrusion 33d in the axial direction of the stator 30. That is, the sensor connector connection part CN is arranged in the vicinity of the fourth corner 24d in the motor case 21. Thus, it is possible to arrange the sensor connector connection part CN at the same position as a position where the U-phase connection terminal Tu, V-phase connection terminal Tv, and W-phase connection terminal Tw are arranged in the axial direction of the rotor 40, and an increase in the axial dimension of the seat motor 10 is suppressed.

The fourth line segment L4 where a portion of the sensor connector connection part CN is arranged corresponds to a second line segment in the present invention.

### <Rotor>

As shown in FIG. 2 to FIG. 4 and FIG. 7, the rotor 40 is rotatably provided on the radial inside of the stator 30 via a minute gap (air gap). That is, the rotor 40 is rotated relative to the stator 30. The rotor 40 includes the rotating shaft 41 that is composed of a stepped round steel bar. Specifically, a small diameter part 41a is integrally provided on the other axial side (left side in FIG. 2) of the rotating shaft 41. A first sun gear 71 forming a first planetary gear reducer 70 of the speed reduction mechanism 50 is fixed to the small diameter part 41a. That is, the rotating shaft 41 drives the first planetary gear reducer 70.

One axial side (right side in FIG. 2) of the rotating shaft 41 is rotatably supported by a second ball bearing 12, and the other axial side of the rotating shaft 41 is rotatably supported by the first ball bearing 11. That is, the rotating shaft 41 is rotatably supported by the first ball bearing 11 and the second ball bearing 12 fixed to the motor case 21 and a cover member 13.

A rotor core 42 formed by laminating multiple steel plates made of ferromagnetic material is mounted on an outer peripheral part of the rotating shaft 41. Specifically, by press-fitting the rotating shaft 41 into a fixing hole 42a of the rotor core 42, the rotor core 42 is firmly fixed at a specified position in the axial direction of the rotating shaft 41.

Furthermore, a ring magnet 43 is fixed to an outer peripheral part of the rotor core 42 via an adhesive (not shown). That is, the ring magnet 43 is provided on the outer peripheral part of the rotating shaft 41, and is, for example, a neodymium magnet formed in a substantially cylindrical shape. The ring magnet 43 is magnetized so that S pole, N pole, S pole, N pole (4 poles in total) are alternately arranged in the circumferential direction of the ring magnet 43. That is, the electric motor part 20 is a 4-pole 6-slot brushless motor. Of course, the number of poles of the ring magnet 43 can be arbitrarily set in accordance with the specifications of the electric motor part 20.

The ring magnet 43 corresponds to the magnet in the present invention.

As shown in FIG. 2, the other axial side of the ring magnet 43 abuts against an abutting member 44 fixed to the rotating shaft 41. On the other hand, one axial side of the ring magnet 43 abuts against a facing member 45 fixed to the rotating shaft 41. Accordingly, the ring magnet 43 is accurately positioned at a specified position between the abutting member 44 and the facing member 45 in the axial direction of the rotating shaft 41.

Here, the other axial side of the abutting member 44 abuts against the inner ring 11b of the first ball bearing 11. That is, the rotating shaft 41 to which the abutting member 44 is fixed has its axial position defined by the first ball bearing 11. Furthermore, the other axial side of the rotor core 42, in addition to the ring magnet 43, also abuts against one axial side of the abutting member 44. Thus, the axial positions of the rotor core 42 and the ring magnet 43 are defined by the first ball bearing 11 via the abutting member 44.

In contrast, the facing member 45 is fixed to one axial side of the rotating shaft 41. The facing member 45 is arranged between the second ball bearing 12 and the ring magnet 43 in the axial direction of the rotating shaft 41. A coil spring SP is arranged on one axial side of the facing member 45. The coil spring SP is arranged between the facing member 45 and the inner ring 12b of the second ball bearing 12 in a state in which an initial load is applied.

Accordingly, the rotor 40 and the coil spring SP are arranged to stretch between the inner ring 11b of the first ball bearing 11 and the inner ring 12b of the second ball bearing 12. Thus, the inner ring 11b of the first ball bearing 11 and the inner ring 12b of the second ball bearing 12 are prevented from rattling in the axial direction relative to the outer ring 11a of the first ball bearing 11 and the outer ring 12a of the second ball bearing 12. In other words, a spring force of the coil spring SP has functions of suppressing the rattling of the first ball bearing 11 and the second ball bearing 12 in the axial direction and reducing operating noise of the seat motor 10.

### <Cover Member>

As shown in FIG. 2, the opening part 25 of the motor case 21 is blocked by the cover member 13. Accordingly, dust or the like is prevented from entering the inside of the motor case 21. Specifically, the cover member 13 includes a cover body 14 and a lid member 18.

As shown in FIG. 5 and FIG. 6, the cover body 14 is formed in a substantially square bowl shape from a resin material such as plastic. The cover body 14 includes: a cover bottom wall 15, formed in a substantially square shape; and a first cover sidewall 16a, a second cover sidewall 16b, a third cover sidewall 16c, and a fourth cover sidewall 16d, integrally provided on the cover bottom wall 15.

In an assembled state of the electric motor part 20, the first cover sidewall 16a is arranged side by side with the first sidewall part 23a (see FIG. 4) in the axial direction of the rotor 40, the second cover sidewall 16b is arranged side by side with the second sidewall part 23b (see FIG. 4) in the axial direction of the rotor 40, the third cover sidewall 16c is arranged side by side with the third sidewall part 23c (see FIG. 4) in the axial direction of the rotor 40, and the fourth cover sidewall 16d is arranged side by side with the fourth sidewall part 23d (see FIG. 4) in the axial direction of the rotor 40.

The first cover sidewall 16a and the second cover sidewall 16b are connected to each other via a first cover corner 17a, and the second cover sidewall 16b and the third cover sidewall 16c are connected to each other via a second cover corner 17b. Furthermore, the third cover sidewall 16c and the fourth cover sidewall 16d are connected to each other via a third cover corner 17c, and the fourth cover sidewall 16d and the first cover sidewall 16a are connected to each other via a fourth cover corner 17d.

Here, an engagement recess 14a is provided in each of the first cover sidewall 16a and the third cover sidewall 16c that are arranged facing each other with the second ball bearing 12 as the center. As shown in FIG. 4, a total of four engagement claws 21a of the motor case 21 are engaged with the engagement recesses 14a, two at a time. Thus, the cover body 14 (cover member 13) is brought into a state of being prevented from rattling with respect to the motor case 21 and coming off.

As shown in FIG. 5, a bearing holding tube 15a is integrally provided at a central part of the cover bottom wall 15 of the cover body 14. The bearing holding tube 15a extends in the axial direction of the rotor 40. The outer ring 12a (see FIG. 2) of the second ball bearing 12 is fixed by press-fitting to the inside of the bearing holding tube 15a. That is, the bearing holding tube 15a is provided on the cover member 13, and the bearing holding tube 15a holds the second ball bearing 12 on its inner peripheral part.

The second ball bearing 12 rotatably supports one axial side of the rotating shaft 41, and the inner ring 12b of the second ball bearing 12 is mounted on one axial side of the rotating shaft 41. Specifically, the inner ring 12b of the second ball bearing 12 is mounted on the rotating shaft 41 in a manner that allows movement only in the axial direction of the rotating shaft 41.

Here, in the radial direction of the second ball bearing 12, multiple steel balls 12c are arranged between the outer ring 12a arranged on the radial outside and the inner ring 12b arranged on the radial inside. Accordingly, the outer ring 12a and the inner ring 12b are capable of smooth relative rotation via the steel balls 12c. The first ball bearing 11 and the second ball bearing 12 are both general-purpose products and adopt the same ball bearing. Thus, the ease of assembly can be improved while parts management is facilitated.

In this way, the cover member 13 that blocks the opening part 25 supports the second ball bearing 12 and corresponds to the bearing holder in the present invention. The second ball bearing 12 held by the cover member 13 corresponds to the bearing in the present invention.

As shown in FIG. 5, a total of three power line holding claws 15b are integrally provided on one axial side (right side in FIG. 2) of the bearing holding tube 15a. The power line holding claws 15b protrude at a predetermined height radially outside the bearing holding tube 15a on one axial side of the bearing holding tube 15a. That is, a total of three power line holding claws 15b are provided on an outer peripheral part of the bearing holding tube 15a.

The total of three power line holding claws 15b have a function of holding the U-phase power wiring UL, V-phase power wiring VL, and W-phase power wiring WL (see FIG. 8) provided along the outer peripheral part of the bearing holding tube 15a. Specifically, each power line holding claw 15b has a function of restricting movement of the U-phase power wiring UL, V-phase power wiring VL, and W-phase power wiring WL in the axial direction of the bearing holding tube 15a.

Here, as shown in FIG. 2, when the second ball bearing 12 held inside the bearing holding tube 15a is viewed in the radial direction of the rotor 40, a portion of the U-phase power wiring UL, V-phase power wiring VL, W-phase power wiring WL and sensor connector connection part CN overlaps the second ball bearing 12. That is, a portion of the U-phase power wiring UL, V-phase power wiring VL, W-phase power wiring WL and sensor connector connection part CN extends into the inside of an axial area AR2 of the second ball bearing 12.

In this way, the second ball bearing 12, the U-phase power wiring UL, the V-phase power wiring VL, the W-phase power wiring WL and the sensor connector connection part CN are each efficiently arranged in a predetermined place in the cover body 14. Consequently, an increase in the dimension of the cover body 14 in the axial direction is suppressed.

As shown in FIG. 5 and FIG. 6, the cover bottom wall 15 of the cover body 14 is provided with a U-phase terminal insertion hole Hu, a V-phase terminal insertion hole Hv, and a W-phase terminal insertion hole Hw through which the U-phase connection terminal Tu, V-phase connection terminal Tv, and W-phase connection terminal Tw (see FIG. 4) are respectively inserted in the axial direction of the rotor 40. The U-phase terminal insertion hole Hu, V-phase terminal insertion hole Hv, and W-phase terminal insertion hole Hw are each formed in a substantially rectangular shape. In the radial direction of the rotor 40, the U-phase terminal insertion hole Hu is arranged between the bearing holding tube 15a and the first cover corner 17a, the V-phase terminal insertion hole Hv is arranged between the bearing holding tube 15a and the second cover corner 17b, and the W-phase terminal insertion hole Hw is arranged between the bearing holding tube 15a and the third cover corner 17c.

Furthermore, the cover bottom wall 15 of the cover body 14 is provided with a connector insertion hole Hc through which the sensor connector connection part CN is inserted in the axial direction of the rotor 40. The connector insertion hole Hc is also formed in a substantially rectangular shape, similarly to the U-phase terminal insertion hole Hu, V-phase terminal insertion hole Hv, and W-phase terminal insertion hole Hw. In the radial direction of the rotor 40, the connector insertion hole Hc is arranged between the bearing holding tube 15a and each of the fourth cover sidewall 16d and the fourth cover corner 17d.

As shown in FIG. 6, the sensor board SB is fixed to a side (left side in FIG. 2) of the cover bottom wall 15 where the electric motor part 20 is provided. Specifically, the sensor board SB is fixed to the cover bottom wall 15 via a substrate fixing screw SC. A through hole 26 through which one axial side of the rotating shaft 41 passes is provided in a central part of the sensor board SB. In the vicinity of the through hole 26, a total of three Hall elements, namely Hall elements 27a, 27b, 27c, corresponding to the U-phase, V-phase, W-phase, are arranged to surround a periphery of the through hole 26. The Hall elements 27a, 27b, and 27c are arranged at equal intervals (intervals of 120 degrees) in the circumferential direction of the through hole 26.

The total of three Hall elements 27a, 27b, and 27c face one axial side of the ring magnet 43 (see FIG. 2) in the axial direction of the rotor 40. Accordingly, each of the Hall elements 27a, 27b, and 27c generates a rectangular wave signal at respective timings according to a change in magnetic poles associated with the rotation of the ring magnet 43 (rotor 40).

Here, the total of three Hall elements 27a, 27b, and 27c are electrically connected to a total of five sensor terminals ST that form the sensor connector connection part CN. A wiring connector 94 (see FIG. 8) of the wiring unit 90 is electrically connected to the sensor connector connection part CN of the sensor board SB. Accordingly, the rectangular wave signal generated by each of the Hall elements 27a, 27b, and 27c is sent to the in-vehicle controller CR (see FIG. 1) via a total of five sensor wires SW (see FIG. 8) that form the signal wiring 93. Thus, the in-vehicle controller CR is able to control a rotation direction or rotation speed of the rotor 40 and further a stop position of the rotor 40, while understanding a rotation state of the rotor 40.

In this way, the sensor board SB, which includes the Hall elements 27a, 27b, and 27c that detect the rotation state of the rotating shaft 41 (rotor 40) and the sensor connector connection part CN to which the in-vehicle controller CR is connected, is mounted on the cover body 14 of the cover member 13. The Hall elements 27a, 27b, and 27c correspond to the rotation sensor in the present invention, the in-vehicle controller CR corresponds to the controller in the present invention, and the sensor connector connection part CN corresponds to the controller connection part in the present invention.

### <Speed Reduction Mechanism>

As shown in FIG. 2, the speed reduction mechanism 50 includes a reducer case 51. The reducer case 51 is formed into a bottomed cylindrical shape by subjecting a steel plate to deep drawing or the like, and has a cross-sectional shape along a direction orthogonal to the longitudinal direction that is substantially square.

On one axial side of the reducer case 51, an annular bottom wall 52 is provided that abuts against the bottom wall part 22 of the motor case 21 in the axial direction of the rotating shaft 41. At a central part of the annular bottom wall 52, a fitting tube 52a into which the bearing support tube 22a of the motor case 21 is fitted is integrally provided. Accordingly, the reducer case 51 is arranged on the same axis with respect to the motor case 21.

The annular bottom wall 52 is provided with a pair of screw insertion holes HS (see FIG. 14) through which the fixing screw S is inserted to fix the speed reduction mechanism 50 to the electric motor part 20. Specifically, in the axial direction of the rotating shaft 41, the pair of screw insertion holes HS respectively face a pair of screw holes 22b provided in the bottom wall part 22 of the motor case 21.

On the other axial side of the reducer case 51, that is, on a side opposite to the annular bottom wall 52 side, an opening 53 is provided. Via the opening 53, a planetary gear reducer 60 is incorporated into the inside of the reducer case 51. On the other axial side of the planetary gear reducer 60, an engagement shoulder SH is provided. An engagement claw 51a of the reducer case 51 engages with the engagement shoulder SH. Accordingly, the planetary gear reducer 60 is brought into a state of being prevented from rattling with respect to the reducer case 51 and coming off.

The planetary gear reducer 60 includes a gearbox 61 that is formed in a substantially box shape and has an internal gear 61a formed on a radial inside thereof. The gearbox 61 is made of a resin material such as plastic and includes a large diameter part 61b and a small diameter part 61c. Specifically, the large diameter part 61b is arranged on one axial side of the gearbox 61, and the small diameter part 61c is arranged on the other axial side of the gearbox 61. The internal gear 61a is provided over the entire axial area of the large diameter part 61b.

In contrast, a third ball bearing 62 including an outer ring 62a, an inner ring 62b, and a steel ball 62c is accommodated inside the small diameter part 61c. Specifically, the outer ring 62a of the third ball bearing 62 is fixed by press-fitting to the inside of the small diameter part 61c. The inner ring 62b of the third ball bearing 62 rotatably supports an output shaft 84 that forms a second planetary gear reducer 80.

On one axial side of the gearbox 61, a blocking member 63 of an annular shape is provided that blocks a box opening 61d of the gearbox 61. The blocking member 63 is fixed by press-fitting to the box opening 61d. A through hole 63a is provided in a central part of the blocking member 63. The through hole 63a is fitted to substantially 1/3 of the first ball bearing 11 on one axial side.

Accordingly, an axial center of the blocking member 63 (planetary gear reducer 60) and an axial center of the first ball bearing 11 are matched with each other without misalignment. Thus, a driving force of the rotating shaft 41 rotatably supported by the first ball bearing 11 is efficiently transmitted to the planetary gear reducer 60. Inside the gearbox 61 and the blocking member 63, the first planetary gear reducer 70 arranged on an input side (side where the electric motor part 20 is provided) and the second planetary gear reducer 80 arranged on an output side (side where the reclining mechanism or the like is provided) are accommodated.

Specifically, the first planetary gear reducer 70 and the second planetary gear reducer 80 are arranged side by side in the axial direction of the rotating shaft 41 so as to enable power transmission between each other, and the planetary gear reducer 60 performs two-stage speed reduction. Accordingly, reduction of size of the planetary gear reducer 60 is achieved.

### <First Planetary Gear Reducer>

As shown in FIG. 2 and FIG. 7, the first planetary gear reducer 70 includes a first sun gear 71 that is mounted on the small diameter part 41a of the rotating shaft 41 and functions as an input part of the first planetary gear reducer 70. The first sun gear 71 is rotated by the rotating shaft 41, and is press-fitted and fixed into the small diameter part 41a while being accurately arranged on the same axis with respect to the small diameter part 41a.

The first planetary gear reducer 70 includes three first planetary gears 72 (only two are shown in FIG. 7) that mesh with both the internal gear 61a provided in the gearbox 61 and the first sun gear 71, and roll around the first sun gear 71. The first planetary gears 72 are each rotatably supported by a first carrier 73 that forms the first planetary gear reducer 70. Specifically, the three first planetary gears 72 are arranged at equal intervals (intervals of 120 degrees) in the circumferential direction of the first carrier 73.

Furthermore, on the other axial side of the first carrier 73, a second sun gear 81 is integrally provided that functions as an output part of the first planetary gear reducer 70 and functions as an input part of the second planetary gear reducer 80. The second sun gear 81 is hollow and is arranged at an axial center of the first carrier 73.

### <Second Planetary Gear Reducer>

As shown in FIG. 2 and FIG. 7, the second planetary gear reducer 80 includes the second sun gear 81 that is integrally provided on the first carrier 73 of the first planetary gear reducer 70.

The second planetary gear reducer 80 includes three second planetary gears 82 (only two are shown in FIG. 7) that mesh with both the internal gear 61a provided in the gearbox 61 and the second sun gear 81, and roll around the second sun gear 81. The second planetary gears 82 are each rotatably supported by a second carrier 83 that forms the second planetary gear reducer 80. Specifically, the three second planetary gears 82 are arranged at equal intervals (intervals of 120 degrees) in the circumferential direction of the second carrier 83.

Furthermore, on the other axial side of the second carrier 83, the output shaft 84 is integrally provided that functions as an output part of the second planetary gear reducer 80. Here, the output shaft 84 is rotatably supported by the inner ring 62b of the third ball bearing 62, and the reclining mechanism or the like (not shown) is connected to the output shaft 84 in a manner that enables power transmission.

Here, the other axial side of the support pin PN is mounted at an axial center of the second carrier 83. On the other hand, one axial side of the support pin PN is mounted at an axial center of the first carrier 73. The support pin PN aligns the axial center of the first carrier 73 (second sun gear 81) with the axial center of the second carrier 83 (output shaft 84), and supports both to be relatively rotatable to each other.

In this way, the planetary gear reducer 60 performs two-stage speed reduction by the first planetary gear reducer 70 and the second planetary gear reducer 80 arranged on the same axis, whereby the rotation speed of the rotor 40 (rotating shaft 41) rotating at high speed is reduced to a predetermined rotation speed, and a rotation force that has been reduced in speed and increased in torque is output from the output shaft 84 to the reclining mechanism or the like (not shown).

The planetary gear reducer 60 is driven by the rotating shaft 41 and corresponds to the driving object in the present invention.

### <Wiring Unit>

As shown in FIG. 8, the wiring unit 90 includes the connector connection part 91 that is connected to a connector (not shown) of the in-vehicle controller CR (see FIG. 1). The wiring unit 90 includes the power wiring 92 and the signal wiring 93. One longitudinal side (right side in FIG. 8) of the power wiring 92 and the signal wiring 93 is connected to the connector connection part 91. On the other hand, the other longitudinal side (left side in FIG. 8) of the power wiring 92 and the signal wiring 93 is connected to the cover member 13.

The power wiring 92 includes: a sheath 92a, made of flame-retardant vinyl or the like; and a total of three power lines, namely the U-phase power line UL, V-phase power line VL, and W-phase power line WL, arranged inside the sheath 92a. As shown in FIG. 8, the other longitudinal side of the U-phase power line UL, V-phase power line VL, and W-phase power line WL is formed to be stripped, and the exposed other longitudinal side of the U-phase power line UL, V-phase power line VL, and W-phase power line WL is electrically connected to the U-phase connection terminal Tu, V-phase connection terminal Tv, and W-phase connection terminal Tw (see FIG. 4) by soldering.

In this way, the U-phase power line UL, V-phase power line VL, and W-phase power line WL are electrically connected to the U-phase connection terminal Tu, V-phase connection terminal Tv, and W-phase connection terminal Tw, and supply driving current to each coil 36. The U-phase power line UL, V-phase power line VL, and W-phase power line WL correspond to the power line in the present invention.

The signal wiring 93 includes a sheath 93a similar to that of the power wiring 92, and a total of five sensor wires SW are provided inside the sheath 93a. As shown in FIG. 8, the other longitudinal side of the total of five sensor wires SW is connected to the wiring connector 94. Accordingly, by simply inserting the wiring connector 94 into the sensor connector connection part CN (see FIG. 5), each sensor wire SW and the sensor board SB (see FIG. 5) can be easily electrically connected.

### <Assembly Procedure of Seat Motor>

Next, an assembly procedure of the seat motor 10 formed as above is described in detail using the drawings.

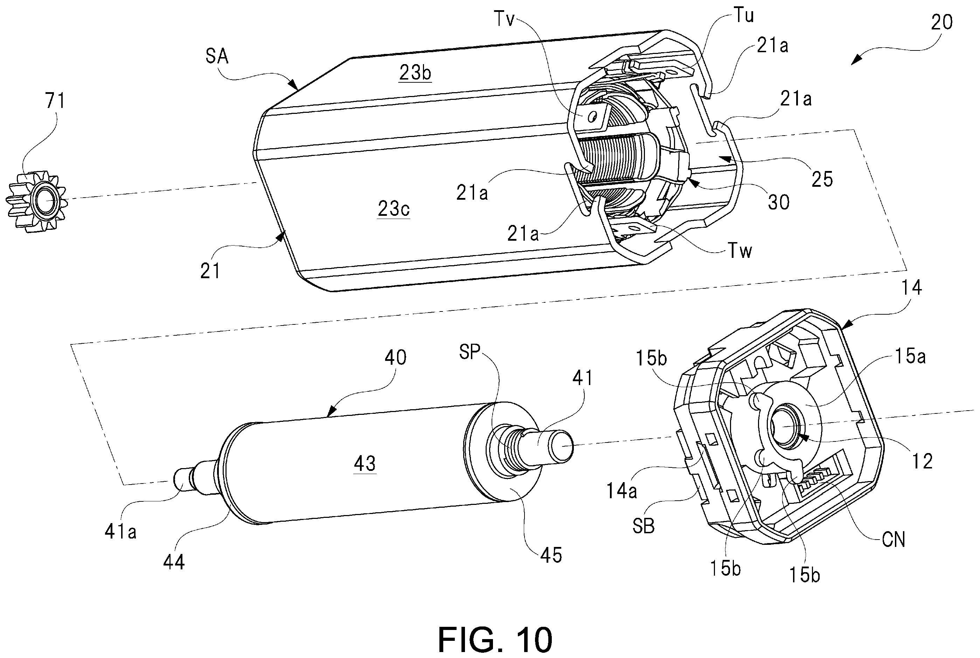

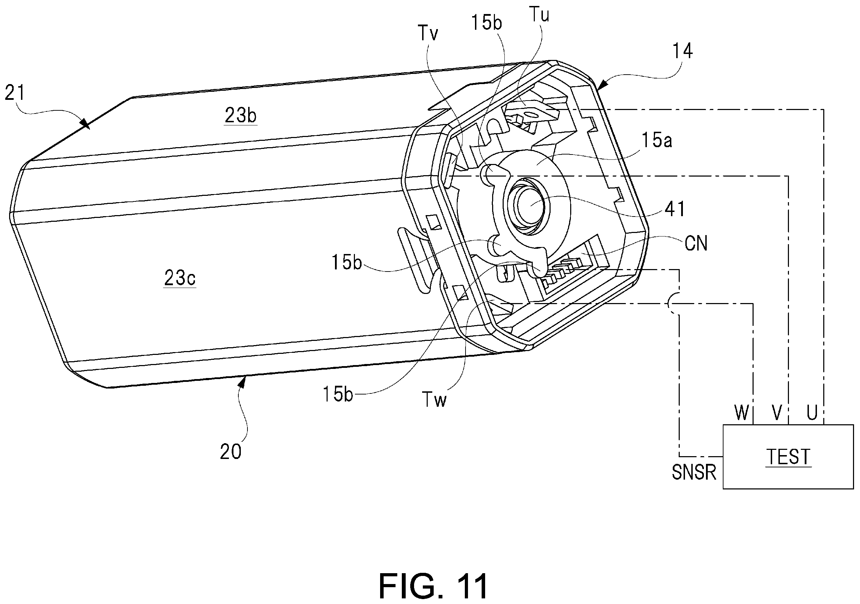

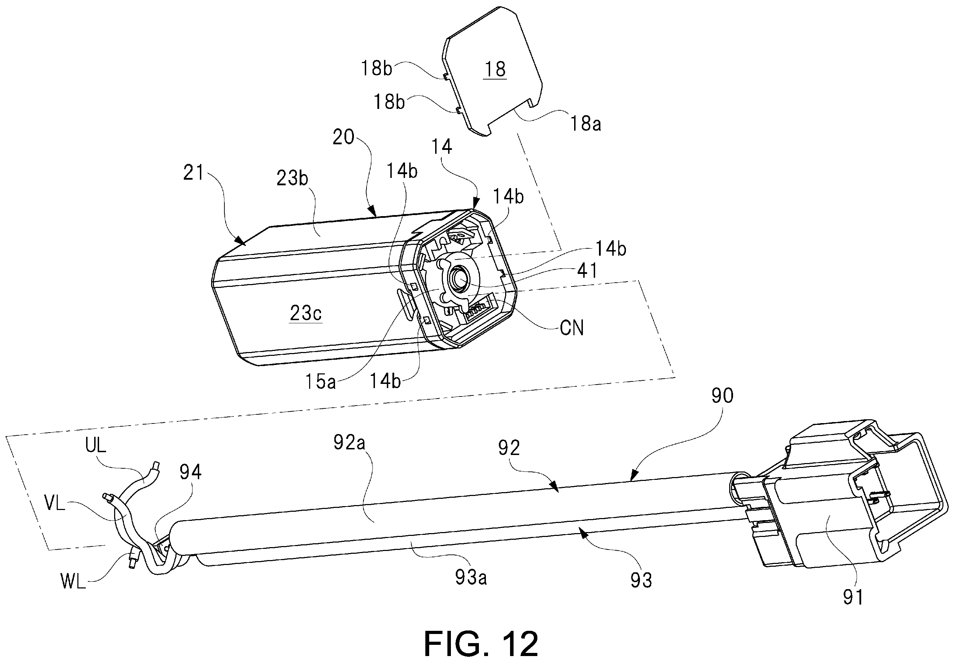

FIG. 10 illustrates an exploded perspective view of the electric motor part; FIG. 11 illustrates a diagram describing an energization test of the electric motor part; FIG. 12 illustrates a perspective view showing the electric motor part, the wiring unit, and the lid member; FIG. 13 illustrates a diagram showing a procedure for connecting the wiring unit to the electric motor part; and FIG. 14 illustrates a diagram showing a procedure for connecting the speed reduction mechanism to the electric motor part.

### <Assembly of Electric Motor Part>

First, as shown in FIG. 10, a stator assy SA, the rotor 40 and the cover body 14 are prepared which have respectively been assembled in a separate assembly process. The first sun gear 71 that forms the first planetary gear reducer 70 (see FIG. 7) is prepared.

Then, along a dash-dotted line in the figure, the rotor 40 is mounted inside the stator assy SA. At this time, a side of the rotor 40 where the abutting member 44 is provided, that is, a side where the small diameter part 41a of the rotating shaft 41 is provided, is made to face the opening part 25 of the motor case 21. After that, the other axial side of the rotating shaft 41 forming the rotor 40 is inserted through the first ball bearing 11 (see FIG. 2) fixed to the bearing support tube 22a.

Accordingly, the mounting of the rotor 40 onto the stator assy SA is completed. The stator assy SA refers to an assembly where the first ball bearing 11 (see FIG. 2) and the stator 30 are fixed to the motor case 21.

Next, along the dash-dotted line in the figure, the cover body 14 mounted with the sensor board SB is mounted on the opening part 25 of the motor case 21. At this time, while a side of the cover body 14 where the sensor board SB is provided is made to face the opening part 25, one axial side of the rotating shaft 41 is inserted through the second ball bearing 12 mounted inside the bearing holding tube 15a.

Then, the engagement claw 21a of the motor case 21 is engaged with the engagement recess 14a of the cover body 14. Accordingly, the mounting of the cover body 14 onto the motor case 21 is completed. After that, the first sun gear 71 is press-fitted and fixed into the small diameter part 41a of the rotating shaft 41 protruding from the bottom wall part 22 (see FIG. 2) of the motor case 21.

The first sun gear 71 may be press-fitted and fixed into the small diameter part 41a before the cover body 14 is mounted onto the opening part 25.

Accordingly, the assembly of the electric motor part 20 is completed.

### <Operation Test of Electric Motor Part>

Next, a check to determine whether the assembled electric motor part 20 operates normally, that is, an operation test (energization test) of the electric motor part 20, is performed. Specifically, as shown in FIG. 11, the operation test is performed by connecting a test device TEST to the electric motor part 20.

Then, U-phase wiring U, V-phase wiring V, and W-phase wiring W provided in the test device TEST are respectively connected to the U-phase connection terminal Tu, V-phase connection terminal Tv, and W-phase connection terminal Tw of the electric motor part 20 using a connection clip or the like (not shown). A sensor wiring SNSR (with connector) provided in the test device TEST is connected to the sensor connector connection part CN of the electric motor part 20.

After that, the test device TEST is operated in a test mode to check a driving state of the electric motor part 20 and determine whether the electric motor part 20 is acceptable or defective (pass/fail). In this way, in the present embodiment, the electric motor part 20 before connecting to the wiring unit 90 (see FIG. 8), which is relatively compact, can be easily subjected to the operation test alone. The reason that the electric motor part 20 can be subjected to the operation test alone in this way is due to the fact that the U-phase connection terminal Tu, V-phase connection terminal Tv, and W-phase connection terminal Tw are arranged inside the cover body 14 to be exposed, and that the sensor connector connection part CN is arranged inside the cover body 14.

Accordingly, the operation test of the electric motor part 20 is ended.

### <Connection Work of Wiring Unit>

Next, as shown in FIG. 12, work of electrically connecting the wiring unit 90 to the electric motor part 20 is performed. First, the wiring unit 90 is prepared which has been assembled in a separate assembly process, and the lid member 18 is prepared. Then, along a dash-dotted line in the figure, the wiring unit 90 is connected to the electric motor part 20, and the lid member 18 is mounted onto the cover body 14.

Then, as shown in FIG. 13, the U-phase power line UL, V-phase power line VL, and W-phase power line WL of the wiring unit 90 are respectively soldered to the U-phase connection terminal Tu, V-phase connection terminal Tv, and W-phase connection terminal Tw. FIG. 13 shows only the soldering of the U-phase power line UL to the U-phase connection terminal Tu. The V-phase power line UV and the W-phase power line UW are soldered to the V-phase connection terminal Tv and the W-phase connection terminal Tw in the same manner as the U-phase power line UL.

Specifically, a tip portion of the U-phase power line UL that is stripped is mounted on the U-phase connection terminal Tu. In this state, the soldering iron TL is inserted into the assembly jig introduction space SP1 as indicated by a solid arrow M1. Accordingly, the U-phase power line UL and the U-phase connection terminal Tu are soldered and electrically connected to each other.

Next, as indicated by a dashed arrow M2, the U-phase power line UL is routed to be wound around the bearing holding tube 15a while being hooked to the power line holding claw 15b. The V-phase power line UV and the W-phase power line UW are also routed to be arranged around the bearing holding tube 15a in the same manner as the U-phase power line UL.

After that, as indicated by a dash-dotted line arrow M3, the wiring connector 94 of the wiring unit 90 is inserted into and electrically connected to the sensor connector connection part CN. Accordingly, the electrical connection of the wiring unit 90 to the electric motor part 20 is completed.

As shown in FIG. 12, when the lid member 18 is mounted onto the cover body 14, the U-phase power line UL, V-phase power line VL, W-phase power line WL and a total of five sensor wires SW (see FIG. 13) are drawn outside through a notch 18a provided in the lid member 18. The lid member 18 is fixed to the cover body 14 by hooking multiple hooking claws 18b provided on the lid member 18 to a hooking part 14b (see FIG. 13) of the cover body 14.

### <Connection Work of Speed Reduction Mechanism>

Next, as shown in FIG. 14, work of connecting the speed reduction mechanism 50 to the electric motor part 20 is performed. First, the planetary gear reducer 60 is prepared which has been assembled in a separate assembly process, and the reducer case 51 and a pair of fixing screws S are prepared. Then, along a dash-dotted line in the figure, the annular bottom wall 52 of the reducer case 51 abuts against the bottom wall part 22 (see FIG. 2) of the motor case 21. At this time, the fitting tube 52a is fitted into the bearing support tube 22a (see FIG. 2).

After that, a pair of fixing screws S are inserted from the inside of the reducer case 51 into a pair of screw insertion holes HS, and are screwed into a pair of screw holes 22b (see FIG. 2) provided in the bottom wall part 22 of the motor case 21. Accordingly, work of fixing the reducer case 51 to the electric motor part 20 is completed.

Next, the planetary gear reducer 60 is incorporated into the inside of the reducer case 51 through the opening 53 (see FIG. 2) of the reducer case 51. At this time, a side of the planetary gear reducer 60 where the blocking member 63 is provided is made to face the opening 53. In the axial direction of the rotor 40, the position of the engagement shoulder SH in the planetary gear reducer 60 and the position of the engagement claw 51a in the reducer case 51 may be aligned with each other. Furthermore, the first sun gear 71 (see FIG. 7) fixed to the small diameter part 41a may mesh with the three first planetary gears 72 (see FIG. 7) that form the first planetary gear reducer 70.

Then, the engagement claw 51a of the reducer case 51 is engaged with the engagement shoulder SH of the planetary gear reducer 60. Accordingly, the connection of the speed reduction mechanism 50 to the electric motor part 20 is completed, and the assembly of the seat motor 10 is ended.

As described in detail above, according to the present embodiment, the cross-sectional shape of the motor case 21 along the radial direction of the rotor 40 is formed in a square including the first corner 24a to the fourth corner 24d. The stator 30 includes: the core body 32 of a cylindrical shape; the first core protrusion 33a to the fourth core protrusion 33d, provided on the outer peripheral part of the core body 32 and abutting against the first corner 24a to the fourth corner 24d; multiple teeth 34, provided on the inner peripheral part of the core body 32; and the coil 36, wound on each of the multiple teeth 34 for each phase. The rotor 40 includes: the rotating shaft 41, driving the planetary gear reducer 60; and the ring magnet 43, provided on the outer peripheral part of the rotating shaft 41. In the radial direction of the rotor 40, between the rotor 40 and the first corner 24a to the third corner 24c, and on the first line segment L1 to the third line segment L3 connecting the rotation center C of the rotor 40 and the first corner 24a to the third corner 24c, the U-phase connection terminal Tu, V-phase connection terminal Tv, and W-phase connection terminal Tw are arranged that are electrically connected to each of the coils 36 provided for each phase.

Accordingly, the need to overlap and arrange molded busbars in the axial direction of the rotor 40 as conventionally is eliminated, making it possible to reduce the axial dimension of the seat motor 10. Thus, further reduction of size of the seat motor 10 can be achieved.

The power wiring 92 (U-phase power line UL, V-phase power line VL, and W-phase power line WL) and the signal wiring 93 (a total of five sensor wires SW) can be arranged while being electrically connected within a range in the radial direction of the motor case 21. Accordingly, portions that partially protrude in the radial direction of the motor case 21 can be removed, making it possible to improve the layout flexibility with respect to the fixing object.

Furthermore, in the radial direction of the rotor 40, the assembly jig introduction spaces SP1, SP2, and SP3 can be formed between the U-phase connection terminal Tu and the first corner 24a, between the V-phase connection terminal Tv and the second corner 24b, and between the W-phase connection terminal Tw and the third corner 24c, respectively. Thus, it is possible to facilitate the work of electrically connecting the U-phase connection terminal Tu, V-phase connection terminal Tv, and W-phase connection terminal Tw to the U-phase power line UL, V-phase power line VL, and W-phase power line WL using the soldering iron TL (improve the ease of assembly).

According to the present embodiment, the inner peripheral part of a circular arc shape is provided inside the first corner 24a to the fourth corner 24d. The first core protrusion 33a to the fourth core protrusion 33d are in surface contact with the inner peripheral part.

Accordingly, damage such as scraping of the inner peripheral part of the first corner 24a to the fourth corner 24d when the stator core 31 is press-fitted and fixed into the motor case 21 can be suppressed. A fixing strength of sufficient magnitude of the stator core 31 with respect to the motor case 21 can be secured with a sufficient magnitude.

Furthermore, according to the present embodiment, the motor case 21 is provided with the opening part 25 that is blocked by the cover member 13 that holds the second ball bearing 12 rotatably supporting the rotating shaft 41. The U-phase connection terminal Tu, V-phase connection terminal Tv, and W-phase connection terminal Tw are arranged in the vicinity of the opening part 25. The sensor board SB including the Hall elements 27a, 27b, and 27c that detect the rotation state of the rotating shaft 41 and the sensor connector connection part CN to which the in-vehicle controller CR is connected is mounted on the cover member 13.

Accordingly, electronic components that form the seat motor 10 can be intensively arranged on the side where the opening part 25 is provided in the longitudinal direction of the motor case 21, making it possible to facilitate the work of electrically connecting these electronic components. Accordingly, the ease of assembly of the seat motor 10 can also be thereby improved.

According to the present embodiment, at least a portion of the sensor connector connection part CN is arranged between the rotor 40 and the fourth corner 24d and on the fourth line segment L4 connecting the rotation center C of the rotor 40 and the fourth corner 24d.

Accordingly, the sensor connector connection part CN can be arranged in the vicinity of the fourth corner 24d. Consequently, in the axial direction of the rotor 40, the sensor connector connection part CN can be arranged at the same position as the position where the U-phase connection terminal Tu, V-phase connection terminal Tv, and W-phase connection terminal Tw are arranged. Thus, an increase in the axial dimension of the seat motor 10 can be suppressed.

Furthermore, according to the present embodiment, the cover member 13 is provided with the bearing holding tube 15a that holds the second ball bearing 12 on the inner peripheral part. A total of three power line holding claws 15b are provided on the outer peripheral part of the bearing holding tube 15a, holding the U-phase power line UL, V-phase power line VL, and W-phase power line WL that are electrically connected to the U-phase connection terminal Tu, V-phase connection terminal Tv, and W-phase connection terminal Tw and supply driving current to the coil 36.

Accordingly, the U-phase power line UL, V-phase power line VL, and W-phase power line WL can be accommodated within an axial range of the bearing holding tube 15a, and an increase in the dimension of the cover member 13 in the axial direction can be suppressed.

According to the present embodiment, when the second ball bearing 12 is viewed in the radial direction of the rotor 40, at least a portion of the U-phase power line UL, V-phase power line VL, W-phase power line WL and sensor connector connection part CN overlaps the second ball bearing 12.

Accordingly, the U-phase power line UL, V-phase power line VL, W-phase power line WL and sensor connector connection part CN can each be efficiently arranged in a predetermined place in the cover body 14 forming the cover member 13, and an increase in the dimension of the cover member 13 in the axial direction can thereby be suppressed.

Furthermore, according to the present embodiment, the electric motor part 20 forming the seat motor 10 can be easily subjected to the operation test alone. Thus, after the seat motor 10 is assembled, it is not necessary to disassemble the seat motor 10 to replace only the electric motor part 20. Accordingly, since manufacturing energy can be saved, particularly Goal 7 ("ensure access to affordable, reliable, sustainable and modern energy for all") and Goal 13 ("take urgent action to combat climate change and its impacts") among the Sustainable Development Goals (SDGs) defined by the United Nations can be achieved.

The present invention is not limited to the above embodiment, and it goes without saying that various changes can be made without deviating from the essence of the present invention. For example, in the above embodiment, the cross-sectional shape of the motor case 21 in the radial direction of the rotor 40 is shown to be a square (regular polygon) including the first corner 24a to the fourth corner 24d. However, the present invention is not limited thereto. That is, it is sufficient if the U-phase connection terminal Tu, V-phase connection terminal Tv, and W-phase connection terminal Tw and the U-phase power line UL, V-phase power line VL, and W-phase power line WL can be easily soldered to each other. The regular polygon may be a regular triangle, regular pentagon, regular hexagon, or the like.

In the above embodiment, during the assembly of the seat motor 10, the wiring unit 90 is connected first, followed by the speed reduction mechanism 50, to the electric motor part 20. However, the present invention is not limited thereto. That is, the speed reduction mechanism 50 can be connected first, followed by the wiring unit 90, to the electric motor part 20.

Furthermore, in the above embodiment, the seat motor 10 is shown as an example of the motor device. However, the present invention is not limited thereto, and can also be applied to a driving source for other in-vehicle equipment such as, for example, a power window device or sunroof device.

The material, shape, dimension, number, installation place or the like of each component in the above embodiment can be arbitrary as long as the present invention can be achieved, and are not limited to the above embodiment.

### [Description of Reference Numerals]

10: seat motor (motor device); 11: first ball bearing; 11a: outer ring; 11b: inner ring; 11c: steel ball; 12: second ball bearing (bearing); 12a: outer ring; 12b: inner ring; 12c: steel ball; 13: cover member (bearing holder); 14: cover body; 14a: engagement recess; 14b: hooking part; 15: cover bottom wall; 15a: bearing holding tube; 15b: power line holding claw; 16a: first cover sidewall; 16b: second cover sidewall; 16c: third cover sidewall; 16d: fourth cover sidewall; 17a: first cover corner; 17b: second cover corner; 17c: third cover corner; 17d: fourth cover corner; 18: lid member; 18a: notch; 18b: hooking claw; 20: electric motor part; 21: motor case; 21a: engagement claw; 22: bottom wall part; 22a: bearing support tube; 22b: screw hole; 23a: first sidewall part; 23b: second sidewall part; 23c: third sidewall part; 23d: fourth sidewall part; 24a: first corner (corner); 24b: second corner (corner); 24c: third corner (corner); 24d: fourth corner (corner); 25: opening part; 26: through hole; 27a, 27b, 27c: Hall element (rotation sensor); 30: stator; 31: stator core; 32: core body; 33a: first core protrusion (core protrusion); 33b: second core protrusion (core protrusion); 33c: third core protrusion (core protrusion); 33d: fourth core protrusion (core protrusion); 34: teeth; 35: insulator; 36: coil; 40: rotor; 41: rotating shaft; 41a: small diameter part; 42: rotor core; 42a: fixing hole; 43: ring magnet (magnet); 44: abutting member; 45: facing member; 50: speed reduction mechanism; 51: reducer case; 51a: engagement claw; 52: annular bottom wall; 52a: fitting tube; 53: opening; 60: planetary gear reducer (driving object); 61: gearbox; 61a: internal gear; 61b: large diameter part; 61c: small diameter part; 61d: box opening; 62: third ball bearing; 62a: outer ring; 62b: inner ring; 62c: steel ball; 63: blocking member; 63a: through hole; 70: first planetary gear reducer; 71: first sun gear; 72: first planetary gear; 73: first carrier; 80: second planetary gear reducer; 81: second sun gear; 82: second planetary gear; 83: second carrier; 84: output shaft; 90: wiring unit; 91: connector connection part; 92: power wiring; 92a: sheath; 93: signal wiring; 93a: sheath; 94: wiring connector; BS: boss for lamination fixing; C: rotation center of rotor; CN: sensor connector connection part (controller connection part); CR: in-vehicle controller (controller); HS: screw insertion hole; Hc: connector insertion hole; Hu: U-phase terminal insertion hole; Hv: V-phase terminal insertion hole; Hw: W-phase terminal insertion hole; L1: first line segment (a first line segment); L2: second line segment (a first line segment); L3: third line segment (a first line segment); L4: fourth line segment (a second line segment); PN: support pin; S: fixing screw; SA: stator assy; SB: sensor board; SC: substrate fixing screw; SH: engagement shoulder; SNSR: sensor wiring; SP: coil spring; SP1, SP2, SP3: assembly jig introduction space; ST: sensor terminal; SW: sensor wire; TEST: test device; Tu: U-phase connection terminal (connection terminal); Tv: V-phase connection terminal (connection terminal); Tw: W-phase connection terminal (connection terminal); U: U-phase wiring; V: V-phase wiring; W: W-phase wiring; UL: U-phase power line (power line); VL: V-phase power line (power line); WL: W-phase power line (power line); WT: crossover wire

## Claims

1. A motor device (10) **characterized by** comprising:
a stator (30), fixed to inside of a motor case (21); and
a rotor (40), rotated relative to the stator (30), wherein
a cross-sectional shape of the motor case (21) along a radial direction of the rotor (40) is formed in a polygon including a plurality of corners (24a, 24b, 24c, 24d);
the stator (30) comprises:
a core body (32) of a cylindrical shape;
a core protrusion (33a, 33b, 33c, 33d), provided on an outer peripheral part of the core body (32) and abutting against the corner (24a, 24b, 24c, 24d);
a plurality of teeth (34), provided on an inner peripheral part of the core body (32); and
a coil (36), wound on each of the plurality of teeth (34) for each phase;
the rotor (40) comprises:
a rotating shaft (41), driving a driving object (60); and
a magnet (43), provided on an outer peripheral part of the rotating shaft (41); and
in the radial direction of the rotor (40), between the rotor (40) and the corner (24a, 24b, 24c, 24d) and on a first line segment (L1) connecting a rotation center (C) of the rotor (40) and the corner (24a, 24b, 24c, 24d), a connection terminal (Tu, Tv, Tw) is arranged that is electrically connected to each of the coils (36) provided for each phase.

2. The motor device (10) as claimed in claim 1, wherein
an inner peripheral part of a circular arc shape is provided inside the corner (24a, 24b, 24c, 24d); and
the core protrusion (33a, 33b, 33c, 33d) is in surface contact with the inner peripheral part.

3. The motor device (10) as claimed in claim 1 or claim 2, wherein
the motor case (21) is provided with an opening part (25) that is blocked by a bearing holder (13), the bearing holder (13) holding a bearing (12) that rotatably supports the rotating shaft (41);
the connection terminal (Tu, Tv, Tw) is arranged in the vicinity of the opening part (25); and
a sensor board (SB) is mounted on the bearing holder (13), the sensor board (SB) including a rotation sensor (27a, 27b, 27c) that detects a rotation state of the rotating shaft (41) and a controller connection part (CN) to which a controller (CR) is connected.

4. The motor device (10) as claimed in claim 3, wherein
in the radial direction of the rotor (40), between the rotor (40) and the corner (24a, 24b, 24c, 24d) and on a second line segment (L2) connecting the rotation center (C) of the rotor (40) and the corner (24a, 24b, 24c, 24d), at least a portion of the controller connection part (CN) is arranged.

5. The motor device (10) as claimed in claim 3, wherein
the bearing holder (13) is provided with a bearing holding tube (15a) that holds the bearing (12) on an inner peripheral part; and
an outer peripheral part of the bearing holding tube (15a) is provided with a power line holding claw (15b), the power line holding claw (15b) holding a power line (UL, VL, WL) that is electrically connected to the connection terminal (Tu, Tv, Tw) and supplies driving current to the coil (36).

6. The motor device (10) as claimed in claim 5, wherein
when the bearing (12) is viewed in the radial direction of the rotor (40), at least a portion of the power line (UL, VL, WL) and the controller connection part (CN) overlaps the bearing (12).
